# EUROPEAN PATENT APPLICATION

(11) **EP 4 554 224 A1**
(43) Date of publication of application: **14.05.2025**
(21) Application number: 23835822.0
(22) Date of filing: 05.07.2023
(51) Int. Cl.: H04N 19/593, H04N 19/70, H04N 19/186, H04N 19/132, H04N 19/11

(54) **IMAGE ENCODING/DECODING METHOD AND APPARATUS, AND RECORDING MEDIUM HAVING BITSTREAM STORED THEREIN**

(30) Priority: 05.07.2022 US 202263358517 P
(71) Applicant: LG Electronics Inc., Yeongdeungpo-gu Seoul 07336 (KR)
(72) Inventor: YOO, Sunmi, Seoul 06772 (KR); NAM, Junghak, Seoul 06772 (KR); CHOI, Jangwon, Seoul 06772 (KR); PARK, Naeri, Seoul 06772 (KR); JANG, Hyeongmoon, Seoul 06772 (KR)
(74) Representative: Maikowski & Ninnemann Patentanwälte Partnerschaft mbB
(86) International application number: PCT/KR2023/009486
(87) International publication number: WO 2024/010356

(57) **Abstract**

A device and method for decoding/encoding an image according to the present disclosure may configure a candidate list of a current chroma block based on an intra prediction mode of a luma block corresponding to the current chroma block, derive an intra prediction mode of the current chroma block based on the candidate list, and generate a prediction sample of the current chroma block based on the derived intra prediction mode.

## Description

### [Technical Field]

The present disclosure relates to an image encoding/decoding method and device, and a recording medium having a bitstream stored therein.

### [Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

### [Disclosure]

### [Technical Problem]

The present disclosure is directed to providing a method and device for configuring a candidate list for intra prediction of a chroma component block.

The present disclosure is directed to providing a method and device for signaling mode information for intra prediction of a chroma component block.

### [Technical Solution]

An image decoding method and device according to the present disclosure construct a candidate list of a current chroma block based on an intra prediction mode of a luma block corresponding to the current chroma block, derive an intra prediction mode of the current chroma block based on the candidate list, and generate a prediction sample of the current chroma block based on the derived intra prediction mode.

The image decoding method and device according to the present disclosure may determine whether a cross-component linear model (CCLM) mode is applied to the current chroma block.

The image decoding method and device according to the present disclosure may determine whether a direct mode (DM) is applied to the current chroma block when it is determined that the CCLM mode is not applied to the current chroma block.

The image decoding method and device according to the present disclosure may construct the candidate list when it is determined that the DM mode is not applied to the current chroma block.

In the image decoding method and device according to the present disclosure, the candidate list may include an intra prediction mode of at least one of a first luma block including a sample at an upper left position within a luma block corresponding to the current chroma block, a second luma block including a sample at an upper right position therewithin, a third luma block including a sample at a lower left position therewithin, or a fourth luma block including a sample at a lower right position therewithin.

In the image decoding method and device according to the present disclosure, the candidate list may include an intra prediction mode of at least one of a first chroma block adjacent to an upper left side of the current chroma block, a second chroma block adjacent to an upper side thereof, a third chroma block adjacent to an upper right side thereof, a fourth chroma block adjacent to a left side thereof, or a fifth chroma block adjacent to a lower left side thereof.

In the image decoding method and device according to the present disclosure, the candidate list may include a decoder-side intra mode derivation (DIMD) mode.

An image encoding method and device according to the present disclosure construct a candidate list of a current chroma block based on an intra prediction mode of a luma block corresponding to the current chroma block, determine an intra prediction mode of the current chroma block based on the candidate list, and generate a prediction sample of the current chroma block based on the determined intra prediction mode.

There is provided a computer-readable digital storage medium in which encoded video/image information that causes an image decoding apparatus according to the present disclosure to perform an image decoding method is stored.

There is provided a computer-readable digital storage medium in which video/image information generated according to an image encoding method according to the present disclosure is stored.

There are provided a method and device for transmitting video/image information generated according to an image encoding method according to the present disclosure.

### [Advantageous Effects]

According to the present disclosure, prediction accuracy can be increased and compression performance can be improved by effectively configuring a candidate list for intra prediction of a chroma component block.

According to the present disclosure, compression performance can be improved by effectively signaling mode information for intra prediction of a chroma component block.

### [Description of Drawings]

FIG. 1 is a diagram illustrating a video/image coding system according to the present disclosure.
FIG. 2 illustrates a schematic block diagram of an encoding apparatus to which embodiments of the present disclosure may be applied and in which encoding of a video/image signal is performed.
FIG. 3 illustrates a schematic block diagram of a decoding apparatus to which embodiments of the present disclosure may be applied and in which decoding of a video/image signal is performed.
FIG. 4 illustrates a flowchart illustrating an intra prediction method performed by a decoding apparatus according to an embodiment of the present disclosure.
FIG. 5 is a diagram for describing a candidate list configuring method according to an embodiment of the present disclosure.
FIG. 6 is a flowchart illustrating a chroma intra prediction mode determination method according to an embodiment of the present disclosure.
FIG. 7 is a diagram for describing a chroma intra prediction mode according to an embodiment of the present disclosure.
FIG. 8 is a diagram illustrating a schematic configuration of an intra predictor performing an intra prediction method according to the present disclosure.
FIG. 9 is a flowchart illustrating an inter prediction method performed by an encoding apparatus as an embodiment according to the present disclosure.
FIG. 10 is a diagram illustrating a schematic configuration of an intra predictor that performs an inter prediction method according to the present disclosure.
FIG. 11 is a diagram illustrating an example of a content streaming system to which embodiments of the present disclosure may be applied.

### [Modes of the Invention]

The present disclosure may be subject to various modifications and may have various embodiments, and thus specific embodiments will be illustrated in the drawings and described in detail in the detailed description. However, it should be understood that this is not intended to limit the present disclosure to specific embodiments, but rather includes all modifications, equivalents, or substitutes included within the spirit and technical scope of the present disclosure. Similar reference numerals are used to refer to similar components in the description of each drawing.

Terms such as first, second, etc. may be used to describe various components, but the components should not be limited by the terms. The terms are used only for the purpose of distinguishing one component from another. For example, a first component may be referred to as a second component, and similarly, a second component may be referred to as a first component without departing from the scope of the present disclosure. The term "and/or" includes a combination of a plurality of related described items or any of a plurality of related described items.

When a component is referred to as being "coupled" or "connected" to another component, it should be understood that it may be directly coupled or connected to the other component, but that there may be other components therebetween. On the other hand, when a component is referred to as being "directly coupled" or "directly connected" to another component, it should be understood that there are no other components therebetween.

The terms used in this application are used only to describe specific embodiments and are not intended to limit the present disclosure. Singular expressions include plural expressions unless the context clearly indicates otherwise. In this application, it should be understood that terms such as "include" and "have" are intended to specify the presence of features, numbers, steps, operations, components, parts or combinations thereof described in the specification, but do not exclude in advance the possibility of the presence or addition of one or more other features, numbers, steps, operations, components, parts or combinations thereof.

The present disclosure relates to video/image coding. For example, the method/embodiment disclosed in this specification may be applied to a method disclosed in the versatile video coding (VVC) standard. In addition, the method/embodiment disclosed in this specification may be applied to a method disclosed in the essential video coding (EVC) standard, the AOMedia Video 1 (AV1) standard, the 2nd generation of audio video coding standard (AVS2), or the next generation video/image coding standard (e.g. H.267 or H.268, etc.).

This specification presents various embodiments related to video/image coding, and unless otherwise stated, the embodiments may be performed in combination with each other.

In this specification, video may mean a collection of a series of images over time. A picture generally means a unit representing one image of a specific time period, and a slice/tile is a unit that constitutes a part of the picture in coding. The slice/tile may contain one or more coding tree units (CTUs). One picture may be composed of one or more slices/tiles. One tile is a rectangular area composed of a plurality of CTUs within a specific tile row and a specific tile row of one picture. A tile column is a rectangular area of CTUs having a height equal to the height of the picture and a width designated by the syntax requirements of a picture parameter set. A tile row is a rectangular area of CTUs having a height designated by a picture parameter set and a width equal to the width of the picture. CTUs within one tile may be arranged consecutively according to a CTU raster scan, while tiles within one picture may be arranged consecutively according to a raster scan of the tile. One slice may contain an integer number of complete tiles or an integer number of consecutive complete CTU rows within a tile of a picture that may be contained exclusively in a single NAL unit. Meanwhile, one picture may be partitioned into two or more subpictures. A subpicture may be a rectangular area of one or more slices within a picture.

Pixel or pel may be the smallest unit that constitutes a picture (or image). In addition, 'sample' may be used as a term corresponding to a pixel. A sample may generally represent a pixel or a pixel value and may represent only a pixel/pixel value of a luma component or only a pixel/pixel value of a chroma component.

A unit can represent a basic unit of image processing. The unit may include at least one of a specific area of a picture and information related to that area. One unit may include one luma block and two chroma (e.g., cb and cr) blocks. In some cases, the unit may be used interchangeably with terms such as block or area. In general, an MxN block may contain a set (or array) of samples (a sample array) or transform coefficients consisting of M columns and N rows.

In this specification, "A or B" may mean "only A," "only B," or "both A and B." In other words, in this specification, "A or B" may be interpreted as "A and/or B." For example, in this specification, "A, B or C" may mean "only A," "only B," "only C," or "any combination of A, B and C."

The slash (/) or comma used in this specification may mean "and/or." For example, "A/B" may mean "A and/or B." Accordingly, "A/B" may mean "only A," "only B," or "both A and B." For example, "A, B, C" may mean "A, B, or C."

In this specification, "at least one of A and B" may mean "only A," "only B," or "both A and B." In addition, in this specification, the expressions "at least one of A or B" or "at least one of A and/or B" may be interpreted the same as "at least one of A and B."

In addition, in this specification, "at least one of A, B and C" may mean "only A," "only B," "only C," or "any combination of A, B and C." In addition, "at least one of A, B or C" or "at least one of A, B and/or C" may mean "at least one of A, B and C."

In addition, parentheses used in this specification may mean "for example." Specifically, when indicated as "prediction (intra prediction)," "intra prediction" may be suggested as an example of "prediction." In other words, "prediction" in this specification is not limited to "intra prediction," and "intra prediction" may be suggested as an example of "prediction." In addition, even when indicated as "prediction (i.e. intra prediction)," "intra prediction" may be suggested as an example of "prediction."

Technical features individually described in one drawing in this specification may be implemented individually or simultaneously.

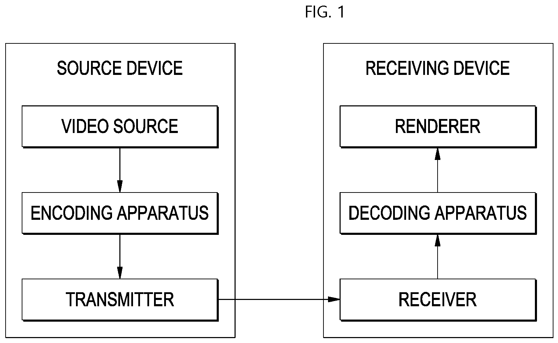

FIG. 1 is a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

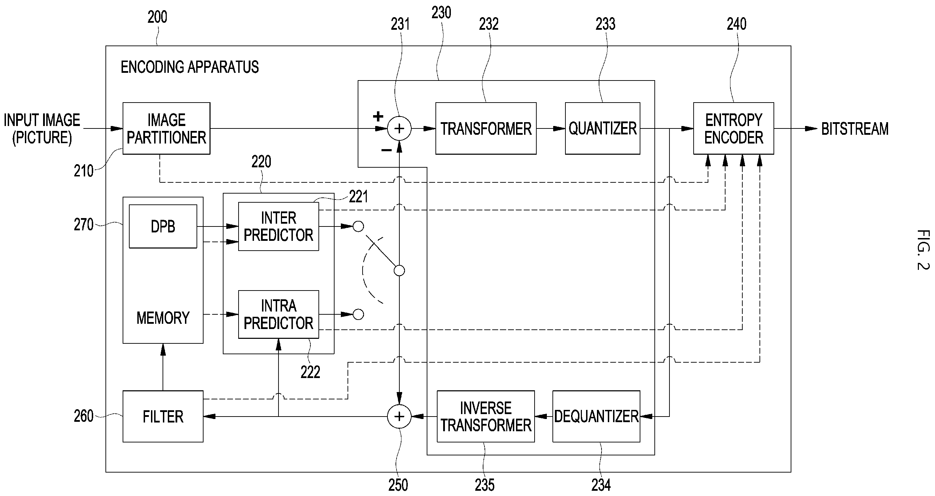

FIG. 2 is a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconfigurer or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconfigurer or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

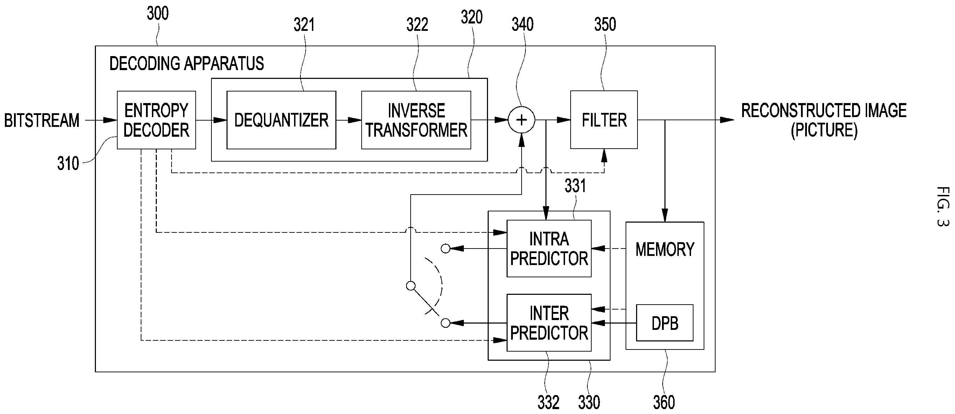

FIG. 3 is a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 322.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the larget coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconfigurer or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

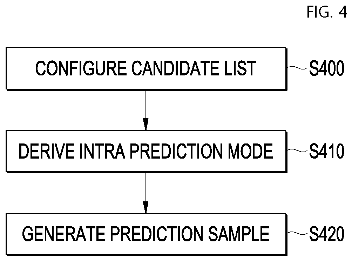

FIG. 4 is a flowchart illustrating an intra prediction method performed by the decoding apparatus 300 according to an embodiment of the present disclosure.

In an embodiment of the present disclosure, a method of coding intra prediction mode information of a chroma component block is proposed. Specifically, for intra prediction of a chroma component block to which cross-component linear model (CCLM) prediction is not applied, a prediction mode candidate list may be additionally configured to an existing one direct mode (DM) to code mode information. In the present disclosure, the prediction mode candidate list is not limited to a name, and may also be referred to as an intra prediction mode candidate list, a mode candidate list, a candidate list, an intra prediction mode list, a chroma intra prediction mode candidate list, a chroma mode candidate list, a chroma mode list, a chroma candidate list, etc.

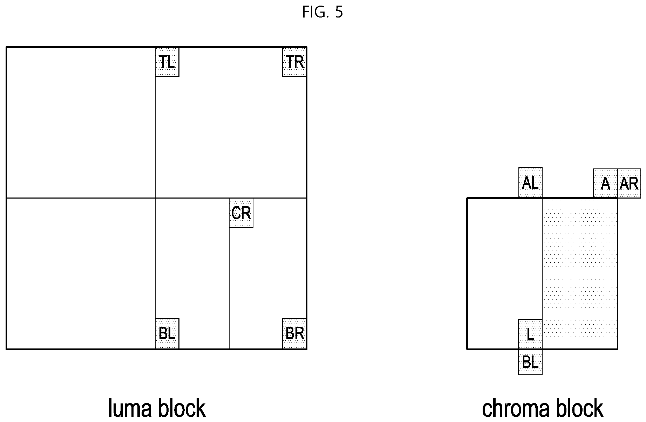

Referring to FIG. 4, the decoding apparatus may configure a candidate list based on an intra prediction mode of a luma block corresponding to a current chroma block (S400). The method of configuring the candidate list will be described in detail below with reference to FIG. 5.

As an embodiment, when the DM mode is applied, it may be determined that the intra prediction mode of a luma block including a sample corresponding to the center position of the current chroma block (CR in FIG. 5) is the intra prediction mode of the current chroma block.

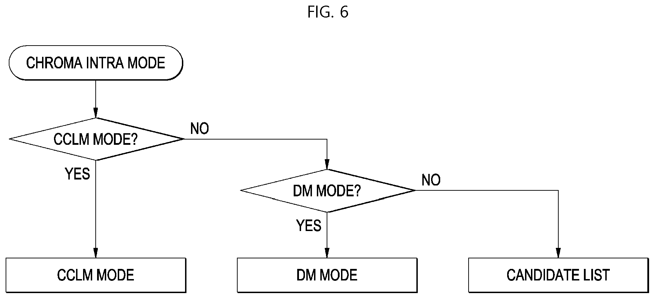

Prior to this determination, the decoding apparatus may determine (or check) whether the CCLM mode is applied to the current chroma block and may determine whether the DM mode is applied to the current chroma block when the CCLM mode is not applied thereto. This will be described below with reference to FIG. 6.

The decoding apparatus may derive the intra prediction mode of the current chroma block based on the candidate list (S410). As an embodiment, a syntax element indicating a candidate (i.e., a chroma intra prediction mode) used for intra prediction of the current chroma block within the candidate list may be signaled from the encoding apparatus to the decoding apparatus. The syntax element may be an index.

The decoding apparatus may generate a prediction sample (or predicted block) of the current chroma block based on the derived intra prediction mode (S420). That is, the decoding apparatus may perform intra prediction on the current chroma block based on the derived intra prediction mode.

FIG. 5 is a diagram for describing a method of configuring a candidate list according to an embodiment of the present disclosure.

According to an embodiment of the present disclosure, the decoding apparatus may configure a candidate list using the intra prediction mode of the luma block corresponding to the current chroma block. As an example, the intra prediction mode of the luma block including samples of four positions (TL, TR, BL, and BR) excluding the CR block at the central position among the luma blocks corresponding to the current chroma block may be added (or inserted) to the candidate list.

In addition, the decoding apparatus may configure the candidate list using the intra prediction mode of the neighboring chroma block adjacent to the current chroma block. That is, the intra prediction mode of the neighboring chroma block may be added to the candidate list. In an embodiment, the candidate list may include eight candidates. In an embodiment, when the candidate list is not fully filled, the candidate list may be filled with a predefined default mode.

In an embodiment, the decoding apparatus may configure the candidate list in the following order. As an embodiment, the description will focus on a case where the candidate list includes 8 candidates, but the present disclosure is not limited thereto.
1. Intra prediction mode of block at TL position of co-located luma block (i.e., corresponding luma block)
2. Intra prediction mode of block at TR position of co-located luma block
3. Intra prediction mode of block at BL position of co-located luma block
4. Intra prediction mode of block at BR position of co-located luma block
5. Intra prediction mode of neighboring L block of current chroma block
6. Intra prediction mode of neighboring A block of current chroma block
7. Intra prediction mode of neighboring BL block of current chroma block
8. Intra prediction mode of neighboring AR block of current chroma block
9. Intra prediction mode of neighboring AL block of current chroma block
10. ±1 mode of intra prediction mode of block at CR position of co-located luma block
11. ±1 mode of intra predicted mode that is not the planar or DC mode and is a candidate that does not overlap with previously included candidates, among the modes acquired first from among the modes of No. 5 to No. 9
12. Planar mode, vertical mode, horizontal mode, DC mode, vertical diagonal (VDIA) mode (top left direction mode) 66, vertical mode -4, vertical mode +4, horizontal mode -4, horizontal mode +4, and prediction modes 42, 58, 10, 26, 38, 62, 6, and 30

Looking at the order of configuring the candidate list, in the modes of No. 1 to No 4, the intra prediction mode is selected from co-located luma block. That is, the modes of No. 1 to No. 4 show one example for selecting 4 DM modes. The search position or order of co-located luma blocks in the modes of No. 1 to No. 4 may be changed. As another example, the DM mode may be searched for in the order of BL → TR → TL → BR.

In addition, the modes of No. 5 to No. 9 may be selected for the neighboring chroma blocks adjacent to the current chroma block. When less than 8 intra prediction modes are selected (or added) after searching up to the mode of No. 9, intra prediction modes of No. 10 to No. 12 may be iterated and additional ones may be added to the candidate list. As an embodiment, the search order of the corresponding position luma block and neighboring chroma blocks of the modes of No. 1 to No. 4 and No. 5 to No. 9 may be changed. In addition, the alternate modes of the modes of No. 10 and No. 11 and the default mode of the mode of No. 12 may be replaced with other predefined modes.

FIG. 6 is a flowchart illustrating a method of determining a chroma intra prediction mode according to an embodiment of the present disclosure.

According to an embodiment of the present disclosure, the intra prediction mode of a chroma block may be signaled as illustrated in FIG. 6.

The decoding apparatus may determine (or check) whether the CCLM mode is applied to the current chroma block. When the CCLM mode is applied to the current chroma block, a prediction sample of the current chroma block may be generated based on the CCLM mode.

When the CCLM mode is not applied to the current chroma block, the decoding apparatus may determine whether the DM mode is applied to the current chroma block. When the DM mode is applied to the current chroma block, it may be determined that the intra prediction mode of the luma block including the sample corresponding to the center position (CR in FIG. 5) of the current chroma block is the intra prediction mode of the current chroma block. The prediction sample of the current chroma block may be generated based on the determined intra prediction mode of the current chroma block.

When the DM mode is not applied to the current chroma block, the decoding apparatus may configure a candidate list for determining the intra prediction mode of the current chroma block. In this case, the method previously described with reference to FIGS. 4 and 5 may be applied. Redundant descriptions related thereto are omitted. After the candidate list is configured, index information indicating the final selected optimal prediction mode within the candidate list may be signaled.

In an embodiment, the prediction modes of the candidate list may be encoded by performing truncated unary binarization with a maximum number of bins of 7 as shown in Table 1 below.

**[Table 1]**

| | | | | | | | |
|---|---|---|---|---|---|---|---|
| mode 0 | 0 | | | | | | |
| mode 1 | 1 | 0 | | | | | |
| mode 2 | 1 | 1 | 0 | | | | |
| mode 3 | 1 | 1 | 1 | 0 | | | |
| mode 4 | 1 | 1 | 1 | 1 | 0 | | |
| mode 5 | 1 | 1 | 1 | 1 | 1 | 0 | |
| mode 6 | 1 | 1 | 1 | 1 | 1 | 1 | 0 |
| mode 7 | 1 | 1 | 1 | 1 | 1 | 1 | 1 |

Referring to Table 1, the first N (1≤N≤8) bins may be subjected to context encoding through a context model, and the remaining (8-N) bins may be subjected to bypass coding. As an example, the first bin may be subjected to context encoding through the context model, and the remaining seven bins may be subjected to bypass coding.

In addition, as an embodiment, a duplication check may be performed during the candidate list configuration process. For example, when adding a candidate to the candidate list, it may be checked whether the mode overlaps with the intra prediction mode (i.e., DM mode) of the luma block at the CR position of FIG. 5. In addition, when adding a candidate to the candidate list, the candidate list may be configured without overlapping modes by performing the duplication check with candidates already added to the candidate list.

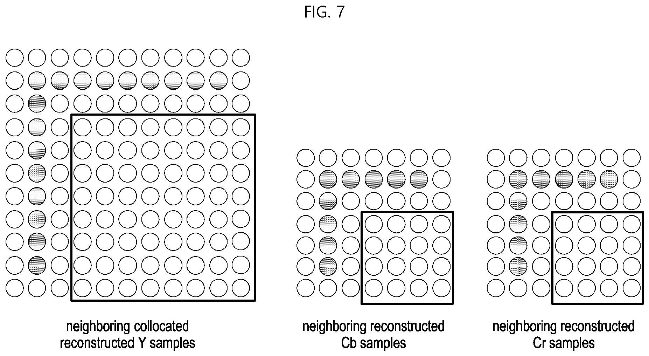

FIG. 7 is a diagram for describing a chroma intra prediction mode according to an embodiment of the present disclosure.

According to an embodiment of the present disclosure, additional candidate modes may be considered in addition to the candidates described above with reference to FIG. 5. Specifically, a chroma decoder-side intra mode derivation (DIMD) mode may be used as a candidate. The chroma DIMD mode represents a mode that is derived identically in the encoder and decoder without specific mode information signaling.

The neighboring samples for deriving the chroma DIMD mode may be defined as illustrated in FIG. 7. That is, when the DIMD is applied, the intra prediction mode of the current block may be derived based on the neighboring samples illustrated in FIG. 7. As an embodiment, the following method may be applied.

A variance may be calculated based on at least two samples belonging to a neighboring area of the current block. Here, the variance may include at least one of the variance in the horizontal direction or the variance in the vertical direction. The intra prediction mode of the current block may be derived based on at least one of the variance in the horizontal direction or the variance in the vertical direction. The magnitude of the variance may be determined based on the sum of the variance in the horizontal direction and the variance in the vertical direction. Through this derivation method, one intra prediction mode may be derived for the current block, or two or more intra prediction modes may be derived. In the present disclosure, the variance-based derivation method may be referred to as the DIMD mode. The variance-based derivation method may be used by deriving intra prediction mode information in the encoder and decoder without directly transmitting the intra prediction mode information.

As an embodiment, when the variance-based derivation method is applied, one or more intra prediction modes may be derived from reconstructed neighboring samples. In this case, one or more prediction modes may be derived based on the variance calculated from the reconstructed neighboring samples according to the embodiment of the present disclosure. For example, one or more intra prediction modes may be derived from the reconstructed neighboring samples. As an example, the maximum number of intra prediction modes derived through the variance-based derivation method may be predefined in the encoder/decoder. As an example, the maximum number of intra prediction modes derived through the variance-based derivation method may be N. For example, N may be defined as 1, 2, 3, 4, 5, 6, or 7. In addition, when neighboring pixels cannot be utilized or the directionality of neighboring blocks cannot be specified, a default mode can be set. In this case, the default mode may be set to a non-directional mode. The default mode may be set to a planar mode. The default mode may be set to the planar mode and/or the DC mode.

As an example, a predictor obtained by the derived intra prediction mode (which may be referred to as a prediction sample or a predicted block) may be combined with a predictor obtained by the planar mode (which may be abbreviated as a planar mode predictor). For example, a predictor obtained by the derived intra prediction mode may be weighted-summed with the planar mode predictor. In this case, as an example, the weights used in the weighted sum may be determined based on the variance calculated from the reconstructed neighboring samples according to the embodiment of the present disclosure.

In addition, as an example, when the number of intra prediction modes derived through the variation-based derivation method is two or more, the predictor obtained by the derived intra prediction mode may be combined with the planar mode predictor. As an example, when the number of intra prediction modes derived through the variance-based derivation method is one, the predictor obtained by one derived intra prediction mode, without being combined (or weighted-summed) with a planar mode predictor, may be output as a prediction sample or predicted block by the variance-based derivation method.

In addition, as an example, the variance may be calculated in units of a window having a predetermined size. Based on the calculated variance, an angle indicating the directionality of the sample within the corresponding window may be calculated. The calculated angle may correspond to any one of a plurality of predefined intra prediction modes described above. The magnitude of the variance may be stored/updated for the intra prediction mode corresponding to the calculated angle. In the present disclosure, the magnitude of the variance may be referred to as the amplitude of variance, the histogram amplitude, the histogram size, etc. Through this process, an intra prediction mode corresponding to the calculated variance may be determined for each window. The magnitude of the variance may be stored/updated for the determined intra prediction mode. The top T intra prediction modes having the largest magnitude among the stored magnitudes of the variance are selected, and the selected intra prediction mode may be set as the intra prediction mode of the current block. Here, T may be an integer of 1, 2, 3, or more.

As an example, the neighboring areas of the current block may be the left, upper left, and upper areas of the current block. For example, the variance in the horizontal direction or the variance in the vertical direction may be derived from rows and columns of the second neighboring sample. The rows and/or columns of the second neighboring sample may represent the rows and/or columns located next to the row and column of the neighboring sample immediately adjacent to the current block. As an example, a histogram of the variance (HoG: histogram of oriented gradients) may be derived from the variance in the horizontal direction and the variance in the vertical direction. The variance or histogram of the variance may be derived by applying a window using L-shaped rows and columns of 3 pixels (or pixel lines) around the current block. In this case, the window may be defined to have a size of 3x3. However, as an example, the present disclosure is not limited thereto, and the window may be defined to have a size of 2x2, 4x4, 5x5, etc. In addition, as an example, the window may be a Sobel filter.

As an example, two or more intra prediction modes having the largest variance magnitude (or amplitude) may be selected. A final predicted block may be generated by blending (or combining, weighted-summing) predicted blocks predicted using the selected intra prediction modes and predicted blocks predicted using the planar mode. In this case, the weight applied to each predicted block may be derived based on the histogram amplitude.

That is, the intra prediction mode of the current chroma block may be derived using the neighboring samples of the corresponding luma component block and the neighboring samples of the chroma component.

In another embodiment, the decoding apparatus may configure the candidate list in the following order. That is, the candidate list for deriving the intra prediction mode of the chroma block may be configured in the following order. In this case, the candidate list may be composed of three sublists (subcandidate lists).
1. First sublist
   1-1. Intra prediction mode of block at TL position of co-located luma block
   1-2. Intra prediction mode of block at TR position of co-located luma block
   1-3. Intra prediction mode of block at BL position of co-located luma block
   1-4. Intra prediction mode of block at BR position of co-located luma block
2. Second sublist
   2-1. Intra prediction mode of neighboring L block of current chroma block
   2-2. Intra prediction mode of neighboring A block of current chroma block
   2-3. Intra prediction mode of neighboring BL block of current chroma block
   2-4. Intra prediction mode of neighboring AR block of current chroma block
   2-5. Intra prediction mode of neighboring AL block of current chroma block
3. Third sublist
   3-1. ±1 mode of intra prediction mode of block at CR position of co-located luma block
   3-2. ±1 mode of intra predicted mode that is not the planar or DC mode and is a candidate that does not overlap with previously included candidates, among the modes acquired first from the second sublist
   3-3. Planar mode, vertical mode, horizontal mode, DC mode, vertical diagonal (VDIA) mode 66, vertical mode -4, vertical mode +4, horizontal mode - 4, horizontal mode +4, and prediction modes 42, 58, 10, 26, 38, 62, 6, and 30

Looking at the order of configuring the candidate list, the first sublist selects an intra screen prediction mode from a co-located luma block. The first sublist may be referred to as a DM sublist. That is, the first sublist shows one example for selecting four DM modes. The search position or order of co-located luma blocks in the first sublist may be changed. As another example, the DM mode may be searched for in the order of BL → TR → TL → BR.

In addition, the second sublist may be selected from the neighboring chroma blocks adjacent to the current chroma block. The second sublist may be referred to as a neighboring sublist. When less than 8 intra prediction modes are selected (or added) after searching the second sublist, intra prediction modes of the third sublist may be iterated and additional ones may be added to the candidate list. The third sublist may be referred to as an alternate sublist. The search order of the co-located luma block and neighboring chroma blocks of the first sublist and the second sublist may be changed. In addition, the alternate mode of the third sublist may be replaced with another mode.

In this embodiment, when configuring the candidate list, the prediction mode derived from the chroma DIMD described above may be additionally considered. The chroma DIMD mode may be considered to be added first to the candidate list, may be considered to be added between each sublist, or may be considered to be added after iterating all sublists. As an embodiment, the chroma DIMD mode may be added to the candidate list in the following order
1. First sublist
2. Chroma DIMD prediction mode
3. Second sublist
4. Third sublist

Even when configuring a candidate list including the chroma DIMD mode described above, the embodiment previously described with reference to FIG. 6 and Table 1 may be applied in the same manner. Redundant descriptions related thereto are omitted.

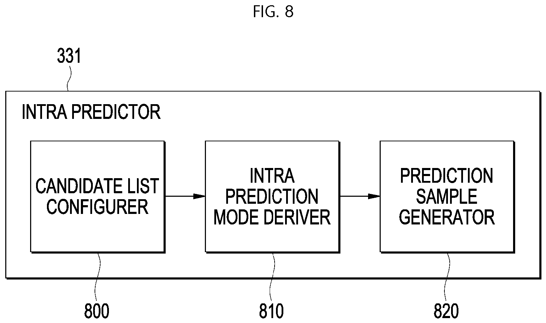

FIG. 8 illustrates a schematic configuration of the intra predictor 331 that performs an intra prediction method according to the present disclosure.

Referring to FIG. 8, the intra predictor 331 may include a candidate list configurer 800, an intra prediction mode deriver 810, and a prediction sample generator 820.

Referring to FIG. 8, the candidate list configurer 800 may configure a candidate list based on the intra prediction mode of a luma block corresponding to a current chroma block. The method previously described with reference to FIGS. 5 to 7 may be applied in the same manner. Redundant descriptions related thereto are omitted.

As described above, when the DM mode is applied, it may be determined that the intra prediction mode of the luma block including the sample corresponding to the center position (CR in FIG. 5) of the current chroma block is the intra prediction mode of the current chroma block.

Prior to this, the candidate list configurer 800 may determine (or check) whether the CCLM mode is applied to the current chroma block and may determine whether the DM mode is applied to the current chroma block when the CCLM mode is not applied. The method previously described with reference to FIG. 6 may be applied in the same manner. Redundant descriptions related thereto are omitted.

The intra prediction mode deriver 810 may derive the intra prediction mode of the current chroma block based on the candidate list. As an embodiment, a syntax element indicating a candidate (i.e., a chroma intra prediction mode) used for intra prediction of the current chroma block within the candidate list may be signaled from an encoding apparatus to a decoding apparatus. The syntax element may be an index.

The prediction sample generator 820 may generate a prediction sample (or a predicted block) of the current chroma block based on the derived intra prediction mode. That is, the prediction sample generator 820 may perform intra prediction on the current chroma block based on the derived intra prediction mode.

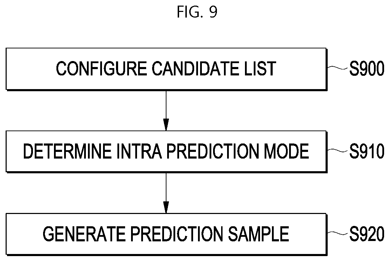

FIG. 9 illustrates an inter prediction method performed by the encoding apparatus 200 according to an embodiment of the present disclosure.

In an embodiment of the present disclosure, a prediction method for a chroma component performed by the encoding apparatus will be described. The embodiment previously described with reference to FIGS. 4 to 8 may be applied in substantially the same manner, and redundant descriptions are omitted here.

Referring to FIG. 8, the encoding apparatus may configure the candidate list based on the intra prediction mode of the luma block corresponding to the current chroma block. The method previously described with reference to FIGS. 5 to 7 may be applied in the same manner. Redundant descriptions related thereto are omitted.

As described above, when the DM mode is applied, it may be determined that the intra prediction mode of the luma block including the sample corresponding to the center position (CR in FIG. 5) of the current chroma block is the intra prediction mode of the current chroma block.

Prior to this, the encoding apparatus may determine (or check) whether the CCLM mode is applied to the current chroma block and may determine whether the DM mode is applied to the current chroma block when the CCLM mode is not applied. The method previously described with reference to FIG. 6 may be applied in the same manner. Redundant descriptions related thereto are omitted.

The encoding apparatus may derive the intra prediction mode of the current chroma block based on the candidate list. As an embodiment, a syntax element indicating the candidate (i.e., the chroma intra prediction mode) used for intra prediction of the current chroma block within the candidate list may be signaled from the encoding apparatus to the decoding apparatus. The syntax element may be an index.

The encoding apparatus may generate a prediction sample (or a predicted block) of the current chroma block based on the derived intra prediction mode. That is, the encoding apparatus may perform intra prediction on the current chroma block based on the derived intra prediction mode.

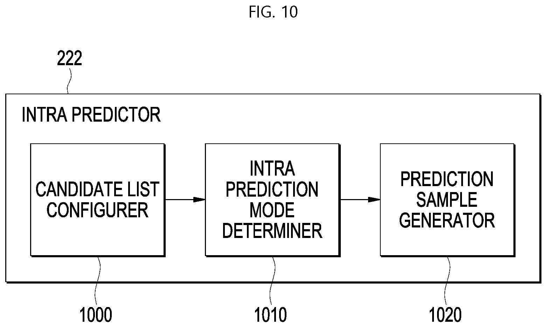

FIG. 10 illustrates a schematic configuration of the intra predictor 222 that performs an inter prediction method according to the present disclosure.

Referring to FIG. 10, the intra predictor 222 may include a candidate list configurer 1000, an intra prediction mode determiner 1010, and a prediction sample generator 1020.

Referring to FIG. 10, the candidate list configurer 1000 may configure a candidate list based on the intra prediction mode of a luma block corresponding to a current chroma block. The method previously described with reference to FIGS. 5 to 7 may be applied in the same manner. Redundant descriptions related thereto are omitted.

As described above, when the DM mode is applied, it may be determined that the intra prediction mode of the luma block including the sample corresponding to the center position (CR in FIG. 5) of the current chroma block is the intra prediction mode of the current chroma block.

Prior to this, the candidate list configurer 1000 may determine (or check) whether the CCLM mode is applied to the current chroma block and may determine whether the DM mode is applied to the current chroma block when the CCLM mode is not applied. The method previously described with reference to FIG. 6 may be applied in the same manner. Redundant descriptions related thereto are omitted.

The intra prediction mode determiner 1010 may derive the intra prediction mode of the current chroma block based on the candidate list. As an embodiment, a syntax element indicating a candidate (i.e., a chroma intra prediction mode) used for intra prediction of the current chroma block within the candidate list may be signaled from an encoding apparatus to a decoding apparatus. The syntax element may be an index.

The prediction sample generator 1020 may generate a prediction sample (or a predicted block) of the current chroma block based on the derived intra prediction mode. That is, the prediction sample generator 1020 may perform intra prediction on the current chroma block based on the derived intra prediction mode.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

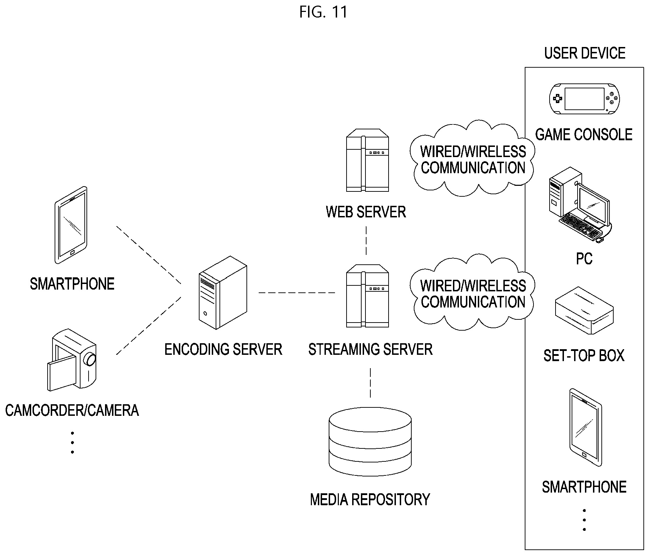

FIG. 11 is an example of a contents streaming system to which embodiments of the present disclosure may be applied.

Referring to FIG. 11, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD)), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. An image decoding method comprising:
configuring a candidate list of a current chroma block based on an intra prediction mode of a luma block corresponding to the current chroma block;
deriving an intra prediction mode of the current chroma block based on the candidate list; and
generating a prediction sample of the current chroma block based on the derived intra prediction mode.

2. The image decoding method according to claim 1, further comprising determining whether a cross-component linear model (CCLM) mode is applied to the current chroma block.

3. The image decoding method according to claim 2, further comprising determining whether a direct mode (DM) is applied to the current chroma block when it is determined that the CCLM mode is not applied to the current chroma block.

4. The image decoding method according to claim 3, wherein the configuring of the candidate list is performed when it is determined that the DM mode is not applied to the current chroma block.

5. The image decoding method according to claim 1, wherein the candidate list includes an intra prediction mode of at least one of a first luma block including a sample at an upper left position within a luma block corresponding to the current chroma block, a second luma block including a sample at an upper right position therewithin, a third luma block including a sample at a lower left position therewithin, or a fourth luma block including a sample at a lower right position therewithin.

6. The image decoding method according to claim 5, wherein the candidate list includes an intra prediction mode of at least one of a first chroma block adjacent to an upper left side of the current chroma block, a second chroma block adjacent to an upper side thereof, a third chroma block adjacent to an upper right side thereof, a fourth chroma block adjacent to a left side thereof, or a fifth chroma block adjacent to a lower left side thereof.

7. The image decoding method according to claim 1, wherein the candidate list includes a decoder-side intra mode derivation (DIMD) mode.

8. An image encoding method comprising:
configuring a candidate list of a current chroma block based on an intra prediction mode of a luma block corresponding to the current chroma block;
determining an intra prediction mode of the current chroma block based on the candidate list; and
generating a prediction sample of the current chroma block based on the determined intra prediction mode.

9. A computer-readable storage medium that stores a bitstream generated by the image encoding method according to claim 8.

10. A method of transmitting data of image information, comprising:
configuring a candidate list of a current chroma block based on an intra prediction mode of a luma block corresponding to the current chroma block;
determining an intra prediction mode of the current chroma block based on the candidate list;
generating a prediction sample of the current chroma block based on the determined intra prediction mode;
generating a bitstream by encoding the current chroma block based on the prediction sample; and
transmitting data including the bitstream.
